# EUROPÄISCHE PATENTANMELDUNG

(11) **EP 0 568 893 A1**
(43) Veröffentlichungstag der Anmeldung: **10.11.1993**
(21) Anmeldenummer: 93106735.9
(22) Anmeldetag: 26.04.1993
(51) Int. Cl.: C08J 11/04, C08J 11/06, B29B 17/00

(54) **Wiederverwendung von Formteilen aus Kunststoffen**

(30) Priorität: 07.05.1992 DE 4215062
(71) Anmelder: BAYER AG, 51368 Leverkusen (DE)
(72) Erfinder: Meier, Helmut-Martin, Dr., W-4030 Ratingen 6 (DE); Morbitzer, Leo, Dr., W-5000 Köln 80 (DE); Dhein, Rolf, Dr., W-4150 Krefeld 1 (DE); Perrey, Hermann, Dr., W-4150 Krefeld 11 (DE)

(57) **Zusammenfassung**

Gegenstand der vorliegenden Erfindung ist die Wiederverwendung von Formteilen aus Thermoplasten und/oder vernetzten Duroplasten, die dadurch gekennzeichnet ist, daß man die Formteile mit unverarbeiteten Thermoplasten und gegebenenfalls mit aushärtbaren Reaktionsharzen vermischt und danach verarbeitet und gegebenenfalls aushärtet.

## Beschreibung

Gegenstand der vorliegenden Erfindung ist die Wiederverwendung von Formteilen aus Thermoplasten und/oder vernetzten Duroplasten, die dadurch gekennzeichnet ist, daß man die Formteile mit unverarbeiteten Thermoplasten und gegebenenfalls mit zu vernetzten Duroplasten aushärtbaren Reaktionsharzen vermischt und danach in Spritzgußmaschinen, Pressen oder Extrusionsanlagen zu Formkörpern verarbeitet und gegebenenfalls aushärtet, wobei die Verarbeitung von Formteilen aus Thermoplasten mit unverarbeiteten Thermoplasten allein, und die Verarbeitung von Formteilen aus vernetzten Duroplasten mit unverarbeiteten Thermoplasten allein, ausgenommen sind.

Die Wiederverwendung von Kunststoffabfällen ist zwecks Vermeidung von Rohstoffverlusten ein dringendes Problem. Dies gilt insbesondere für gehärtete Duroplasten, aber auch für Formteile aus Thermoplasten, da diese häufig noch anorganische Zuschläge wie Glasfasern, Pigmente etc. enthalten, so daß eine Wiederverwendung durch bloßes Aufschmelzen nicht zu neuem Rohmaterial für eine erneute Verarbeitung führt.

Bekannt ist nach BE 81 85 11 thermoplastischen Abfall mit Thermoplasten oder Duroplasten zu kombinieren.

Ebenso ist bekannt nach DT 2 615 840 vernetzten Polyurethanabfall mit Thermoplasten zu verarbeiten.
nach DE 3 925 029 ist ein Verfahren bekannt, Abfälle aus Thermoplasten und Duroplasten zu verarbeiten.

Nach EP 334 420 ist ein Verfahren bekannt, thermoplastischen Kunststoffschrott zu verarbeiten.

Nach DE 3 600 174 sind Materialien aus Thermoplastabfall und Duroplastabfall bekannt.

Nach GB 2 161 812 ist ein Verfahren bekannt, vernetzte mit unvernetzten Polymeren thermoplastisch zu verarbeiten.

Aus der DE-OS 28 42 004 (Le A 19 148) ist es bekannt Polycarbonate mit einem Anteil bis zu 50 Gew.-% an vernetzten Polycarbonaten thermoplastisch zu verarbeiten, wobei vor der Verarbeitung unvernetztes Polycarbonat zugesetzt werden kann.

Aus der älteren deutschen Patentanmeldung P 41 25 267,5 (Le A 28 465) sind Mischungen aus thermoplastischem Kunststoffschrott, vernetztem, gegebenenfalls füllstoffhaltigem Kunststoffschrott und einem Reaktionsharz bekannt.

Erfindungsgemäß wird dagegen die Aufarbeitung von Formteilen aus Thermoplasten mit einem Gemisch aus Thermoplasten und Reaktionsharzen, von Formteilen aus Duroplasten mit einem Gemisch aus Thermoplasten und Reaktionsharzen, von Mischungen von Formteilen aus Thermoplasten und Duroplasten entweder mit Thermoplasten oder mit einem Gemisch aus Thermoplasten und Reaktionsharzen beansprucht.

Die Gewichtsverhältnisse von thermoplastischen Formteilen, also von denen, die erfindungsgemäß aufzuarbeiten sind, zu den unverarbeiteten Thermoplasten und gegebenenfalls aushärtbaren Reaktionsharzen liegen zwischen 85 Gew.-% zu 15 Gew.-% und 30 Gew.-% zu 70 Gew.-%, je nachdem wie schwierig die thermoplastischen Formteile durch das erfindungsgemäße Aufarbeitungsverfahren zu reintegrieren sind.

Beträgt der Anteil an zu verarbeitenden Formteilen wesentlich mehr als 85 Gew.-%, so ist der Mischungsprozeß mit dem dann geringeren Anteil an unverarbeitetem Thermoplast und Reaktionsharz entsprechend schwierig und langwierig. Betägt der Anteil an zu verarbeitenden Formteilen wesentlich weniger als 30 Gew.-%, ist die Verfahrensweise weniger effizient, die Raum-Zeit-Ausbeute bei der Aufarbeitung der thermoplastischen Formteile zu gering und der Einsatz der Frischharzkomponenten zu groß, was im Endergebnis zu mehr neuen Formteilen und nicht zu einer spürbaren Mengenreduzierung des thermoplastischen Kunststoffes führt.

Somit liegt der bevorzugte Mengenbereich zwischen 80 Gew.-% zu 20 Gew.-% und 40 Gew.-% zu 60 Gew.-% thermoplastisches Formteil zur Summe aus unverarbeiteten Thermoplasten und gegebenenfalls Reaktionsharz.

Die Gewichtsverhältnisse von Formteilen aus vernetzten Duroplasten, welche erfindungsgemäß aufzuarbeiten sind, zu den unverarbeiteten Thermoplasten und gegebenenfalls Reaktionsharzen, welche erfindungsgemäß zuzusetzen sind, liegen zwischen 5 Gew.-% zu 95 Gew.-% und 50 Gew.-% zu 50 Gew.-%, vorzugsweise zwischen 10 Gew.-% zu 90 Gew.-% und 45 Gew.-% zu 55 Gew.-%, bezogen auf Formteil zu Thermoplast und gegebenenfalls Reaktionsharz.

Wegen der wesentlich schwierigeren Reintegration von Formteilen aus gehärteten Duroplasten sind hierbei die prozentualen Aufarbeitungsquoten des erfindungsgemäßen Verfahrens geringer.

Das Verhältnis seinerseits von einzusetzendem unverarbeitetem Thermoplast zu gegebenenfalls mitzuverwendendem Reaktionsharz richtet sich einerseits nach der Beschaffenheit und stofflichen Substanz der zu verarbeitenden Formteile und andererseits nach der Art der zuzusetzenden unverarbeiteten Thermoplasten.

Ziel des erfindungsgemäßen Aufarbeitungsverfahrens ist es, möglichst compatible, also verträgliche und somit leicht herstellbare und danach gut weiterverarbeitbare Mischungen zu erhalten, denen das Reaktionsharz quasi als Mischungsverdünner und bei der Weiterverarbeitung als reaktiver Verfestiger dient.

Das Verhältnis von unverarbeitetem Thermoplast zu aushärtbarem Reaktionsharz liegt somit zwischen 100 Gew.-% zu 0 Gew.-% und 30 Gew.-% zu 70 Gew.-%, vorzugsweise zwischen 100 Gew.-% zu 0 Gew.-% und 55 Gew.-% zu 45 Gew.-% und insbesondere zwischen 97 Gew.-% zu 3 Gew.-% und 85 Gew.-% zu 15 Gew.-% jeweils unverarbeiteter Thermoplaste zu härtbarem Reaktionsharz.

Formteile aus Thermoplasten im Sinne vorliegender Erfindung sind beliebige Gebrauchsartikel aber auch Abfälle, die bei der Herstellung derartiger Gebrauchsartikel entstehen. Gebrauchsartikel sind beispielsweise Lampen, Eßgeschirr, Haushaltsartikel wie Eimer, Besen und Milchflaschen, aber auch Straßenschilder, Dächer, Fensterrahmen und Fensterscheiben.

Formteile aus vernetzten Duroplasten sind ebenfalls beliebige Gebrauchsartikel wie beispielsweise Stühle, Tische, Bänke oder andere Kunststoffmöbel, Blumengefäße und Elektroartikel wie Staubsauger und Telefonapparate.

Unverarbeitete Thermoplasten sind die üblichen Thermoplastqualitäten, wie sie bei der Herstellung dieser Thermoplasten und deren anschließender Isolierung anfallen; patentrechtlich versteht man darunter im allgemeinen die unmittelbaren Verfahrensprodukte des jeweiligen Kunststoffherstellungsverfahrens.

Aushärtbare Reaktionsharze sind die dem Fachmann geläufigen Kunststoffharze oder deren Lösungen, die aufgrund reaktiver, d.h. beispielsweise polymerisierbarer oder polykondensierbarer Gruppen in den Molekülen zu hochmolekularen im allgemeinen unschmelzbaren Kunststoffen, den sogenannten Duroplasten ausreagieren. Dies erfolgt im allgemeinen im Laufe der Formgebung oder Formkörperbildung aus diesen Reaktionsharzen durch die Anwesenheit geringer Mengen an Katalysatoren.

Unverarbeitete Thermoplasten im Sinne vorliegender Erfindung sind beispielsweise Polycarbonate, Polyamide, Polyester; Polyolefine wie Polystyrol, Polyvinylchlorid, Polyethylen, Polypropylen; Polyurethan, Polyphenylensulfide, Polyphenylenoxide, Acrylnitril-Butadien-Styrol-Copolymer, Polysulfone und Polyetherketone.

Im Bedarfsfall können auch Mischungen dieser unverarbeiteten Thermoplasten in dem erfindungsgemäßen Verfahren eingesetzt werden.

Bevorzugte unverarbeitete Thermoplaste sind Polycarbonat, Polyamid, Polyethylen, Polypropylen, Polyphenylensulfid, Acrylnitril-Butadien-Styrol-Copolymer, Polysulfon.

Die thermoplastischen Formteile sind solche, die beispielsweise aus den vorstehend genannten unverarbeiteten Thermoplasten hergestellt worden waren, gegebenenfalls unter Zusatz von üblichen Additiven, Stabilisatoren, Füllstoffen, Faserstoffen, Farbstoffen, Pigmenten und/oder Flammschutzmitteln, bzw. bei der Herstellung von Formteilen aus diesen Thermoplasten als Abfall und Verschnitt anfallen. Bevorzugte thermoplastische Formteile sind Verpackungen, Lampenfassungen, Leuchtengehäuse, Schreibgeräte, Wasserbehälter, Brillen, Hohlkammerplatten, Verteilerkästen.

Aushärtbare Reaktionsharze sind beispielsweise ungesättigte Polyesterharze, Vinylesterharze, Epoxidharze, Polyurethane, Phenolharze und Harnstoff- und Melaminharze.

Bevorzugte Reaktionsharze sind ungesättigte Polyesterharze, Epoxidharze, Polyurethane.

Die Reaktionsharze können noch übliche Füllstoffe vor allem aber übliche Additive wie Härter, Beschleuniger, Stabilisatoren, Farbstoffe, Inhibitoren und/oder Gleitmittel enthalten.

Formteile aus vernetzten Duroplasten sind solche, die beispielsweise aus den vorstehend genannten Reaktionsharzen hergestellt worden waren, gegebenenfalls unter Zusatz von Füllstoffen wie Kreide, Glasfasern, Quarzsand, Kaolin, Aluminiumoxidhydrat, Kieselgel, Metallpulver und Holzmehl und/oder gegebenenfalls unter Zusatz der vorstehend genannten üblichen Additive. Formteile aus vernetzten Duroplasten schließen Abfälle und Verschnitt ein, die bei der Herstellung von Formteilen aus den Reaktionsharzen anfallen. Die häufigsten Formteile bestehen aus glasfaserverstärkten Polyesterharzen, Glas- oder Kohlenstoff-faserverstärkten Epoxidharzen, glasfaserverstärkten Polyurethanen oder glasfaserverstärkten Phenolharzen.

Die erfindungsgemäß aufzuarbeitenden Formteile aus Thermoplasten werden im allgemeinen vor der Aufarbeitung in einem geeigneten Lösungsmittel vorgequollen und nach Entfernung des Lösungsmittels zu Pulver einer Korngröße von 0,1 mm bis 5 mm vermahlen, ehe die erfindungsgemäße Aufarbeitung erfolgt. Diese Zerkleinerung der Formteile aus Thermoplasten kann auch durch Häckseln und anschließendes Mahlen erfolgen.

Die erfindungsgemäß aufzuarbeitenden Formteile aus vernetzten Duroplasten, die in der Regel sehr hart und sehr füllstoffhaltig sind, bedürfen härterer Zerkleinerungsmaßnahmen um zu Pulvern einer Korngröße von 0,1 mm zu 5 mm zu gelangen. Diese Formteile werden mit Schneidmühlen oder Prallmühlen grob zerkleinerte Dieser Abfall wird dann weiter mit Hammermühlen oder Rotormühlen zu den erfindungsgemäß eingesetzten Partikeln fein gemahlen. Im allgemeinen werden dabei Korngrößen von kleiner als 0,3 mm erreicht.

Die Teilchengrößen werden durch Siebanalyse bestimmt.

Die Vermischung der Komponenten des erfindungsgemäßen Aufarbeitungsverfahrens erfolgt beispielsweise auf knetend arbeitenden Werkzeugen, z.B. auf Zweiwellenknetern, auf Walzenpaaren etc., wobei eine "sauerkrautartige" trockene Masse entsteht.

Diese kann dann in Spritzgußmaschinen, auf üblichen Pressen oder Extrusionsanlagen zu neuen Formkörpern verformt werden. Das Verpressen der Massen kann kalt oder heiß, vorzugsweise bei 80 bis 350°C durchgeführt werden.

Die nach dem erfindungsgemäßen Verfahren erhältlichen neuen Formkörper können vorzugsweise dort eingesetzt werden, wo das äußere Bild keine Rolle spielt und keine allzu hohen Anforderungen an die mechanischen Eigenschaften gestellt werden. Beispiele dafür sind Eisenbahnschwellen, Paletten, Schachtauskleidungen, Werkzeugschränke, LKw-Aufbauten.

Die in den Beispielen genannten Teile und Prozente beziehen sich auf das Gewicht.

### Beispiel 1

Folgende Komponenten wurden auf einem Einwellenextruder bei 250°C compoundiert:
- 10 Tle: eines gehärteten UP-Harzabfalles der durch Behandlung mit Rotomühlen zu einer Korngröße von kleiner 0,3 mm gemahlen wurde,
- 45 Tle: eines Polycarbonates Markrolon 2800,
- 45 Tle: eines bei 150°C/5 Tage gealterten Polycarbonates Makrolon 2800
Aus dem Regranulat wurden Schulterstäbe gespritzt.

### Eigenschaften:

| | |
|---|---|
| E-Modul: | 2573 N/mm² |
| Reißdehnung: | 2,4 % |
| Reißfestigkeit: | 49,4 N/mm² |

### Beispiel 2

Folgende Komponenten wurden auf einem Einwellenextruder bei 250°C compoundiert:
- 50 Tle: eines Polycarbonates Makrolon 2808
- 50 Tle: eines bei 150°C/14 Tage gealterten Polycarbonates Makrolon 2800
Das entstandene Compound wurde regranuliert und zu Schulterstäben verspritzt.

### Eigenschaften:

| | |
|---|---|
| E-Modul: | 2391 N/mm² |
| Reißdehnung: | 97 % |
| Reißfestigkeit: | 61,4 N/mm² |
| Zugfestigkeit: | 65,2 N/mm² |
| Streckspannung: | 65,2 N/mm² |
| Dehnung bei Streckspannung: | 6,4 % |

### Beispiel 3

Folgende Komponenten wurden auf einem Einwellenextruder bei 290°C compoundiert:
- 10 Tle: eines gehärteten UP-Harzabfalles aus Beispiel 1,
- 45 Tle: eines Polyamid 6 Durethan B 30 s,
- 45 Tle: eines bei 150°C/5 Tage gealterten Polyamid 6 Durethan B 30 s
Das entstandene Compound wurde regranuliert und zu Schulterstäben verspritzt.

### Eigenschaften:

| | |
|---|---|
| E-Modul: | 3261 N/mm² |
| Reißdehnung: | 1,1 % |
| Reißfestigkeit: | 35,5 N/mm² |

### Beispiel 4

Folgende Komponenten wurden auf einen Einwellenextruder bei 290°C compoundiert:
- 50 Tle: eines Polyamid 6 Durethan B 30 s,
- 50 Tle: eines bei 150°C/5 Tage gealterten Polyamid 6 B Durethan B 30 s
Das entstandene Compound wurde regranuliert und zu Schulterstäben verspritzt.

### Eigenschaften:

| | |
|---|---|
| E-Modul: | 3511 N/mm² |
| Reißdehnung: | 3 % |
| Reißfestigkeit: | 82,5 N/mm² |

### Beispiel 5

Folgende Mischung wurde hergestellt:
- 10 Tle: eines gehärteten UP-Harzabfalles aus Beispiel 1,
- 80 Tle: eines Polypropylen Pulvers Hostalen PPN 1060 (Schmelzindex: 4 g/10 min),
- 10 Tle: eines ungesättigten Polyesterharzes auf Basis Maleinsäureanhydrid, Diethylenglykol, Ethylenglykol, Dicyclopentadien und 35 % Styrol
Die Mischung ergab ein Pulver, das auf einer Presse bei 220°C mit einer Preßkraft von 190 kN zu einer 1 mm dicken Platte verpreßt wurde.

### Eigenschaften:

| | |
|---|---|
| Schmelzpeak Tₘ: | 162,9°C ermittelt durch DSC |
| Glasübergang T_{g}: | -3°C ermittelt aus dyn.-mechan. Verhalten |

Im Bereich zwischen T_{g} und Tₘ wird eine deutliche Modulerhöhung gegenüber reinem Polypropylen PPN 1060 von G' = 130 N/mm² auf G' = 230 N/mm² bei 80°C sichtbar.

### Beispiel 6

Folgende Mischung wurde hergestellt:
- 50 Tle: eines gehärteten UP-Harzabfalles aus Beispiel 1,
- 50 Tle: eines Polypropylen Pulvers Hostalen PPN 1060
Die Mischung ergab ein Pulver, das auf einer Presse bei 220°C mit einer Preßkraft von 190 kN zu einer 1 mm dicken Platte verpreßt wurde.

### Eigenschaften:

| | |
|---|---|
| Schmelzpeak Tₘ= | 162,1°C ermittelt durch DSC |
| Glasübergang T_{g}: | -1°C ermittelt durch dyn.-mechan. Verhalten |

Im Bereich zwischen T_{g} und Tₘ wird eine deutliche Modulerhöhung gegenüber reinem Polypropylen PPN 1060 von G' = 130 N/mm² auf G' = 450 N/mm² bei 80°C sichtbar,

### Beispiel 7

Folgende Mischung wurde hergestellt:
- 40 Tle: eines gehärteten UP-Harzabfalles aus Beispiel 1,
- 40 Tle: eines Polyphenylensulfid-Pulvers, Tₘ = 280°C,
- 20 Tle: eines ungesättigten Polyesterharzes aus Beispiel 5
Die Mischung ergab ein Pulver, das auf einer Presse bei 310°C mit einer Preßkraft von 190 kN zu einer 1 mm dicken Platte verpreßt wurde.

### Eigenschaften:

| | |
|---|---|
| Schmelzpeak Tₘ: | 279,4°C ermittelt durch DSC |
| Glasübergang T_{g1}: | 86,5°C ermittelt durch DSC |

Im Bereich zwischen 170°C und T_{g1} wird eine deutliche Modulerhöhung gegenüber dem Polyphenylensulfid-Pulver von G' = 130 N/mm² auf G' = 190 N/mm² bei 140°C sichtbar.

Im Tieftemperaturbereich wird eine Modulerhöhung von G' = 1200 N/mm² auf G' = 2000 N/mm² bei -40°C beobachtet. Überraschend ist ebenfalls das Auftauchen eines weiteren Glasübergangs T_{g2} = 15°C im Vergleich zum Polyphenylensulfid.

### Beispiel 8

Folgende Mischung wurde hergestellt:
- 50 Tle: eines gehärteten UP-Harzabfalles aus Beispiel 1,
- 50 Tle: eines Polycarbonates (ηᵣₑₗ = 1,24; Schmelzindex: 19 g/10 min)
Die Mischung ergab ein Pulver, das auf einer Presse bei 270°C mit einer Preßkraft von 190 kN zu einer 1 mm dicken Platte verpreßt wurde.

### Eigenschaften:

Aus dem dynamisch-mechanischen Verhalten ist eine Modulerhöhung im Temperaturbereich von -120°C bis etwa 100°C gegenüber Makrolon 2808 von G' = 900 N/mm² auf G' = 1400 N/mm² bei 40°C zu beobachten.

## Patentansprüche

1. Wiederverwendung von Formteilen aus Thermoplasten und/oder vernetzten Duroplasten, dadurch gekennzeichnet, daß man die Formteile mit unverarbeiteten Thermoplasten und gegebenenfalls mit zu vernetzten Duroplasten aushärtbaren Reaktionsharzen vermischt und danach in Spritzgußmaschinen, Pressen oder Extrusionsanlagen zu Formkörpern verarbeitet und gegebenenfalls aushärtet, wobei die Verarbeitung von Formteilen aus Thermoplasten mit unverarbeiteten Thermoplasten allein und die Verarbeitung von Formteilen aus vernetzten Duroplasten mit unverarbeiteten Thermoplasten allein, ausgenommen sind.
